# EUROPÄISCHE PATENTSCHRIFT

(11) **EP 1 125 903 B1**
(45) Veröffentlichungstag und Bekanntmachung des Hinweises auf die Patenterteilung: **26.05.2004**
(21) Anmeldenummer: 00127314.3
(22) Anmeldetag: 13.12.2000
(51) Int. Cl.: C04B 18/28, C04B 28/30, C04B 38/10

(54) **Holzwolle-Bauelement und Verfahren zu seiner Herstellung**
Wood-wool based building elements and process for manufacturing the same
Eléments de construction à base de laine de bois et procédé de fabrication

(30) Priorität: 10.02.2000 DE 10006041
(43) Veröffentlichungstag der Anmeldung: 22.08.2001
(73) Patentinhaber: Heraklith AG, 9586 Fürnitz (AT)
(72) Erfinder: Doppelreiter, Manfred, Dr., 9800 Spittal (AT); Neuherz, Willibald, Dr., 9702 Ferndorf (AT); Moser, Günter, 9500 Villach (AT)
(74) Vertreter: Becker, Thomas, Dr., Dipl.-Ing.

(56) Entgegenhaltungen:
- WO-A-94/04473
- DE-A- 4 327 452
- DE-A- 19 541 626
- FR-A- 1 294 733
- GB-A- 659 575
- US-A- 1 443 097
- PATENT ABSTRACTS OF JAPAN vol. 016, no. 093 (C-0917), 6. Februar 1992 (1992-02-06) & JP 03 275544 A (NOZAWA CORP), 6. Dezember 1991 (1991-12-06)
- CHEMICAL ABSTRACTS, vol. 115, no. 6, 12. August 1991 (1991-08-12) Columbus, Ohio, US; abstract no. 55755y, M. OMURA: Seite 386; XP000251241 & JP 03 020000 A (ID.) 29. Januar 1991 (1991-01-29)

## Beschreibung

Die Erfindung betrifft ein Holzwolle-Leichtbauelement und ein Verfahren zu dessen Herstellung.

"Bauelement" bezeichnet dabei jede Art eines geformten Erzeugnisses, beispielsweise eine Platte. Holzwolle-Leichtbauplatten sind unter dem Handelsnamen "Heraklith" seit langem bekannt. Die Holzwolle-Fasern weisen üblicherweise eine Länge von mehr als 8 cm, eine Breite von 3 bis 6 mm und eine Dicke von 0,2 bis 0,5 mm auf. Die in unregelmäßiger Geometrie vorliegenden, spröden Holzwolle-Fasern liegen innerhalb des Bauelementes in Form eines offenporigen, dreidimensionalen Gerüstes unregelmäßig verteilt vor und sind zumindest abschnittweise untereinander über ein Bindemittel, beispielsweise ein magnesitisches Bindemittel, verbunden.

Nach der DIN 4102 erfolgt eine Unterteilung derartiger Bauteile in A - nicht brennbare Baustoffe - mit den Unterklassen A1 - Stoffe, die überhaupt nicht brennbar sind - und A2 - Stoffe, welche nur geringfügig brennbar sind, den Brand aber nicht weiter aufrechterhalten -. Die weitere Unterteilung der DIN 4102 erfolgt in B - brennbare Stoffe -, wobei diese Klasse wieder unterteilt ist in B1 - schwer entflammbare Baustoffe -, B2 - normal entflammbare Baustoffe - und B3 - leicht entflammbare Baustoffe -.

Die eingangs beschriebene, bekannte Holzwolle-Leichtbauplatte ist in der Klasse B1 eingestuft.

In der FR-A-1 294 733 werden ein Verfahren zur Herstellung eines Bauprodukts und das so hergestellte Bauprodukt beschrieben. Bei der Herstellung wird ein Bariumchlorid als Flammschutzmittel einer Mischung aus Zellulosematerial und Zement zugemischt.

Chemical Abstracts, vol. 115, no. 6, 12 August 1991; Columbus, Ohio, US; abstract no 55755y und JP 03 020000 A beschreiben Bauplatten aus einer anorganischen Materialmischung, die organische Fasern enthält.

Bauelemente gemäß US 1,443,097 werden aus einer Mischung aus sehr dünnen Fasern, Bindemittel (MgO) und Flammschutzmittel (MgCl₂) hergestellt.

Patent Abstracts of Japan, vol. 016, no. 093 (C-0917), 06.02.1992 & JP 03 275544 A erwähnen die Verwendung von Pflanzenfasern in Mischung mit BaCl₂, Ammoniumhydrogenphosphat, Wasser, Zuschlag sowie einem hydraulischen Bindemittel zur Herstellung von Bauteilen.

Mit der vorliegenden Erfindung wird das Ziel verfolgt, Holzwolle-Bauelemente zur Verfügung zu stellen, die einen erhöhten Brandschutz schaffen und in Klasse A2 gemäß DIN 4102 eingeordnet werden können.

Versuche, dem Bindemittel bei der Herstellung der Holzwolle-Bauelemente ein Flammschutzmittel beizumischen, führten zu keinen befriedigenden Ergebnissen. Ebenso konnte mit einem Aufsprühen eines flüssigen Flammschutzmittels auf die Holzwolle-Fasern die gewünschte Brennbarkeitsklasse A2 nicht erreicht werden.

Demgegenüber wurden Holzwolle-Bauelemente der Klasse A2 (gemäß DIN 4102) unter Verwendung von Holzwolle-Fasern erzielt, die mit einem Flammschutzmittel getränkt (vollständig imprägniert) sind.

Danach betrifft die Erfindung ein Holzwolle-Leichtbauelement mit den Merkmalen von Anspruch 1.

Zur Herstellung derartiger Holzwolle-Leichtbauelemente bietet die Erfindung ein Verfahren gemäß Anspruch 8 an.

Überraschend wurde festgestellt, daß die Art der Einbringung des Flammschutzmittels entscheidenden Einfluß auf die erzielbare Brennbarkeitsklasse hat. Bei einer (vollständigen) Tränkung der (rohen) Holzwolle-Fasern mit einer Brandschutzmittellösung lassen sich Bauelemente herstellen, die eine um bis zu 60 % erhöhte Brandschutzwirkung zeigen, verglichen mit Bauelementen, bei denen das Flammschutzmittel in oder auf das Bindemittel (zum Beispiel eine Bindemittelsuspension) aufgetragen wurde.

Die Herstellung, insbesondere die Formgebung der Bauelemente, kann im übrigen auf an sich bekannte Art und Weise erfolgen. Dazu können die mit dem Bindemittel beschichteten Fasern in eine Form gegeben und verdichtet (gepreßt) werden, wobei die Elemente solange in ihrer Form gehalten werden, bis das Bindemittel abgebunden und das Bauelement formstabil ist.

Eine andere Herstellungstechnik beschreibt die EP 0 655 991 B1. Dabei werden die Holzwolle-Fasern (hier nach der Tränkung in der Flammschutzmittellösung) zu Bauelementen verarbeitet und während der Verarbeitung (Formgebung) die Holzwolle-Fasern mit einem Bindemittelschaum inkrustiert.

Ein mögliches Bindemittel besteht im übrigen aus einer Bindemittelsuspension, die auf die Holzwolle-Fasern aufgesprüht wird oder in die die Holzwolle-Fasern zur entsprechenden Beschichtung eingelegt werden. Als Bindemittel kann dabei ein magnesitisches Bindemittel, beispielsweise eine MgO-Kaustersuspension, verwendet werden.

Es lassen sich Bauelemente mit Rohdichten zwischen beispielsweise 200 und 700 kg/m³ herstellen.

Der Anteil des Flammschutzmittels beträgt, bezogen auf die Holzwolle-Fasern, 5 bis 50 Gew.-%, nach einer Ausführungsform 10 bis 40 Gew.-%, wobei Anteile von 25 bis 35 Gew.-% häufig ausreichen; die gewünschte Brennbarkeitsklasse zu erreichen. Dies ist unter anderem abhängig von der Art des Holzes, der Größe der Holzwolle-Fasern, der Art des Flammschutzmittels beziehungsweise der Konzentration einer entsprechenden Flammschutzmittel-Lösung.

Dabei kann das Flammschutzmittel zum Beispiel aus Ammoniumphosphat, Ammoniumpolyphosphat, Ammoniumsulfat, Trinatriumphosphat, Hexametaphosphat, Dipentaerythydrit, jeweils allein oder in Mischungen mit unterschiedlichen Anteilen bestehen.

Lösungen der vorgenannten Flammschutzmittel können in Konzentrationen zwischen 5 und 50 %, typischerweise in Konzentrationen von 25 bis 35 % eingesetzt werden, wobei wässrige Lösungen verwendet werden können. Die Viskosität einer solchen Lösung bei 20° C liegt beispielsweise in der Größenordnung von 0,01 P (dPas).

Der Anteil des Bindemittels, bezogen auf die mit dem Flammschutzmittel imprägnierten (getränkten) Holzwolle-Fasern liegt im Bereich 10 bis 40 Gew.-%, nach einer Ausführungsform im Bereich 15 bis 30 Gew.-%.

Der Anteil ist unter anderem abhängig von der gewünschten Festigkeitsklasse sowie vom Anteil der offenen Poren (Freiräume zwischen den Holzwolle-Fasern).

Dabei beziehen sich die vorgenannten Mengenangaben für das Bindemittel, welches nicht nur ein magnesitisches Bindemittel sein kann, sondern beispielsweise auch Portlandzement (beziehungsweise eine entsprechende Suspension) auf die getränkten Holzwolle-Fasern im getrockneten Zustand.

Bezüglich des Verfahrens zur Herstellung folgt daraus, daß die Holzwolle-Fasern nach der Tränkung mit dem Flammschutzmittel und vor der Beschichtung mit dem Bindemittel getrocknet werden können.

Weitere Merkmale der Erfindung ergeben sich aus den Merkmalen der Unteransprüche sowie den sonstigen Anmeldungsunterlagen.

Nachstehend wird die Erfindung anhand eines Ausführungsbeispieles näher erläutert.

Dabei werden Holzwolle-Fasern der eingangs genannten Art und Größe drei Minuten in einer 30 %-igen wässrigen Lösung von Ammoniumphosphat getränkt. Aufgrund der offenen Porosität der Holzwolle-Fasern kommt es innerhalb dieses Zeitraums zu einer vollständigen Durchtränkung der Holzwolle-Fasern mit dem Flammschutzmittel.

Anschließend werden die so getränkten Fasern getrocknet, danach mit einer MgO-Kaustersuspension oberflächlich inkrustiert und in einen oben offenen Formkasten mit rechteckiger Grundfläche gelegt sowie mit einem Stempel von oben bis zur gewünschten Plattendicke verdichtet. Anschließend wird der Stempel wieder abgezogen. Die gebildete Platte bleibt solange im Formkasten, bis das Bindemittel (die MgO-Kaustersuspension) abgebunden und die Platte formstabil ist. Danach wird sie aus der Form entnommen und in ein Regal zur Resttrocknung überführt.

Die so hergestellte Platte erfüllte im Test die Brennbarkeitsklasse A2.

In weiteren Brandversuchen konnte die verkohlungsfördernde Wirkung des Flammschutzmittels nachgewiesen werden. Unmittelbar nach Beginn des Brandversuches bildet sich eine dünne Kohlenstoffschicht auf den Holzwolle-Fasern und schützt diese vor einem (weiteren) oxidativen Abbau. Gleichzeitig wird die Flamme zumindest partiell erstickt.

## Patentansprüche

1. Holzwolle-Leichtbauelement mit einer Rohdichte zwischen 200 und 700 kg/m³ und folgenden Merkmalen:
1.1 einem offenporigen, dreidimensionalen Gerüst von unregelmäßig verteilten Holzwolle-Fasern, wobei
1.2 die Holzwolle-Fasern
1.3.1 mit einem Flammschutzmittel getränkt sind,
1.3.2 der Anteil des Flammschutzmittels, bezogen auf die Holzwolle-Fasern, 5 bis 50 Gew.-% beträgt,
1.4.1 zumindest abschnittweise mit einem Bindemittel beschichtet und untereinander verbunden sind, und
1.4.2 der Anteil des Bindemittels, bezogen auf die mit dem Flammschutzmittel getränkten Holzwolle-Fasern, 10 bis 40 Gew.-% beträgt.

2. Bauelement nach Anspruch 1, bei dem der Anteil des Flammschutzmittels, bezogen auf die Holzwolle-Fasern, 10 bis 40 Gew.-% beträgt.

3. Bauelement nach Anspruch 1, bei dem der Anteil des Flammschutzmittels, bezogen auf die Holzwolle-Fasern, 25 bis 35 Gew.-% beträgt.

4. Bauelement nach Anspruch 1, bei dem das Flammschutzmittel aus Ammoniumphosphat, Ammoniumpolyphosphat, Ammoniumsulfat, Trinatriumphosphat, Hexametaphosphat, Dipentaerythydrit oder Mischungen daraus besteht.

5. Bauelement nach Anspruch 1, bei dem der Anteil des Bindemittels, bezogen auf die mit dem Flammschutzmittel getränkten Holzwolle-Fasern, 15 bis 30 Gew.-% beträgt.

6. Bauelement nach Anspruch 1, bei dem das Bindemittel ein anorganisches Bindemittel ist.

7. Bauelement nach Anspruch 1, bei dem das Bindemittel ein magnesitisches Bindemittel ist.

8. Verfahren zur Herstellung eines Holzwolle-Bauelementes nach einem der Ansprüche 1 bis 7 mit folgenden Merkmalen:
8.1 Holzwolle-Fasern werden in einer Flammschutzmittellösung getränkt,
8.2 nach dem Trocknen werden die so getränkten Holzwolle-Fasern zumindest abschnittweise mit einem Bindemittel beschichtet,
8.3 zu Bauelementen verarbeitet, und
8.4 solange in ihrer Form gehalten, bis das Bindemittel abgebunden und das Bauelement formstabil ist.

9. Verfahren nach Anspruch 8, bei dem die Holzwolle-Fasern in einer wässrigen Flammschutzmittellösung getränkt werden.

10. Verfahren nach Anspruch 8, bei dem die Holzwolle-Fasern solange in der Flammschutzmittellösung getränkt werden, bis sich das Gewicht der Holzwolle-Fasern um 5 bis 50 Gew.-% erhöht hat.

11. Verfahren nach Anspruch 8, bei dem die Holzwolle-Fasern nach der Tränkung mit dem Flammschutzmittel und vor der Beschichtung mit dem Bindemittel getrocknet werden.

12. Verfahren nach Anspruch 8, bei dem die Holzwolle-Fasern nach der Tränkung mit dem Flammschutzmittel mit einer Bindemittelsuspension oberflächlich inkrustiert und danach zu Bauelementen verarbeitet werden.

13. Verfahren nach Anspruch 8, bei dem die Holzwolle-Fasern nach der Tränkung mit dem Brandschutzmittel zu Bauelementen verarbeitet und während der Verarbeitung die Holzwolle-Fasern mit einem Bindemittelschaum inkrustiert werden.

## Claims

1. A wood wool light-weight construction element having a raw density between 200 and 700 kg/m3 and the following features:
1.1 an open-pore, three-dimensional structure of irregularly distributed wood wool fibers, wherein
1.2 the wood wool fibers
1.3.1 are soaked with a flame retardant,
1.3.2 the proportion of the flame retardant, relative to the wood wool fibers, is 5 to 50 % by weight,
1.4.1 are at least partialy covered and connected with one another by a binding agent and
1.4.2 the proportion of the binding agent, relative to the wood wool fibers soaked with the flame retardant, is 10 to 40 % by weight.

2. The construction element according to claim 1, wherein the proportion of the flame retardant, relative to the wood wool fibers, is 10 to 40 % by weight.

3. The construction element according to claim 1, wherein the proportion of the flame retardant, relative to the wood wool fires, is 25 to 35 % by weight.

4. The construction element according to claim 1, wherein the flame retardant comprises ammonium phosphate, ammonium poly phosphate, ammonium sulfate, tri sodium phosphate, hexameta phosphate, dipentaerythritol or mixtures thereof.

5. The construction element according to claim 1, wherein the proportion of the binding agent, relative to the wood wool fibers soaked with the flame retardant, is 15 to 30 % by weight.

6. The construction element according to claim 1, wherein the binding agent is an inorganic binding agent.

7. The construction element according to claim 1, wherein the binding agent is a magnesia binding agent.

8. A method for manufacturing a wood shavings component according to one of the claims 1 to 7 with the following features:
8.1 wood wool fibers are soaked in a flame retardant solution,
8.2 after drying the thus soaked wood wool fibers are, at least over a portion thereof, coated with a binding agent,
8.3 are processed to construction elements, and
8.4 are kept in their mold until the binding agent has cured and the construction element stable in its shape.

9. The method according to claim 8, wherein the wood wool fibers are soaked in an aqueous flame retardant solution.

10. The method according to claim 8, wherein the wood wool fibers are soaked in the flame retardant solution until the weight of the wood wool fibers has increased by 5 to 50 % by weight.

11. The method according to claim 8, wherein the wood wool fibers are dried after soaking with the flame retardant and before coating with the binding agent.

12. The method according to claim 8, wherein the wood wool fibers, atter soaking with the flame retardant agent, are encrusted with a binding agent suspension at their surface and are subsequently processed to construction elements.

13. The method according to claim 8, wherein the wood wool fibers, after soaking with the fire protection agent, are processed to construction elements and the wood wool fibers are encrusted with a binding agent foam during processing.

## Revendications

1. Elément de construction léger à base de laine de bois ayant une densité apparente comprise entre 200 et 700 kg/m³ et les caractéristiques suivantes :
1. 1. une charpente tridimensionnelle à pores ouverts en fibres de laine de bois réparties irrégulièrement, dans laquelle
1.2. les fibres de laine de bois
1.3.1. sont imprégnées avec un agent ignifuge,
1.3.2. la proportion d'agent ignifuge rapportée aux fibres de laine de bois est de 5 % à 50 % en poids,
1.4.1. sont enduites, au moins par sections, avec un liant et liées les unes aux autres, et
1.4.2. la proportion de liant rapportée aux fibres de laine de bois imprégnées avec l'agent ignifuge est de 10 % à 40 % en poids.

2. Elément de construction selon la revendication 1, dans lequel la proportion d'agent ignifuge rapportée aux fibres de laine de bois est de 10% à 40% en poids.

3. Elément de construction selon la revendication 1, dans lequel la proportion d'agent ignifuge rapportée aux fibres de laine de bois est de 25 % à 35 % en poids.

4. Elément de construction selon la revendication 1, dans lequel l'agent ignifuge est constitué de phosphate d'ammonium, de polyphosphate d'ammonium, de sulfate d' ammonium, de phosphate trisodique, d' hexamétaphosphate, de dipentaérythrite ou des mélanges de ceux-ci.

5. Elément de construction selon la revendication 1, dans lequel la proportion de liant rapportée aux fibres de laine de bois imprégnées avec l'agent ignifuge est de 15 % à 30 % en poids.

6. Elément de construction selon la revendication 1, dans lequel le liant est un liant inorganique.

7. Elément de construction selon la revendication 1, dans lequel le liant est un liant à la magnésie.

8. Procédé de fabrication d'un élément de construction à base de laine de bois selon l'une quelconque des revendications 1 à 7 avec les caractéristiques suivantes :
8.1. les fibres de laine de bois sont imprégnées avec un agent ignifuge,
8.2. après le séchage, les fibres de laine de bois ainsi imprégnées sont enduites, au moins par sections, avec un liant,
8.3. sont converties en éléments de construction, et
8.4. sont maintenues dans leur moule jusqu'à ce que le liant ait pris et que l'élément de construction soit indéformable.

9. Procédé selon la revendication 8, dans lequel les fibres de laine de bois sont imprégnées avec une solution aqueuse d'agent ignifuge.

10. Procédé selon la revendication 8, dans lequel les fibres de laine de bois sont imprégnées avec la solution d'agent ignifuge jusqu'à ce que le poids des fibres de laine de bois ait augmenté de 5 % à 50 % en poids.

11. Procédé selon la revendication 8, dans lequel les fibres de laine de bois sont séchées après l'imprégnation avec l'agent ignifuge et avant l'enduction avec le liant.

12. Procédé selon la revendication 8, dans lequel, après l'imprégnation avec l'agent ignifuge, les fibres de laine de bois sont incrustées superficiellement avec un liant à suspension et sont ensuite transformées en éléments de construction.

13. Procédé selon la revendication 8, dans lequel, après l'imprégnation avec l'agent ignifuge, les fibres de laine de bois sont transformées en éléments de construction et, pendant la transformation, les fibres de laine de bois sont incrustées avec une mousse de liant.
